# EUROPÄISCHE PATENTANMELDUNG

(11) **EP 4 648 266 A1**
(43) Veröffentlichungstag der Anmeldung: **12.11.2025**
(21) Anmeldenummer: 24174769.0
(22) Anmeldetag: 08.05.2024
(51) Int. Cl.: H02K 15/00, H02K 15/16

(54) **KLEMMKEILVORRICHTUNG FÜR EINE POL-LÜCKE**

(71) Anmelder: Flender GmbH, 46395 Bocholt (DE)
(72) Erfinder: TOT, Caba, 46395 Bocholt (DE); FEILHUBER-SEIDL, Stefan, 46395 Bocholt (DE)
(74) Vertreter: Michalski Hüttermann & Partner Patentanwälte mbB

(57) **Zusammenfassung**

Klemmkeilvorrichtung 10 zum Einsetzen in eine Pol-Lücke eines Rotors einer elektrischen Maschine, mit einem ersten Klemmteil 12, einem zweiten Klemmteil 14, einem Spreizteil 16, wobei erstes und zweite Klemmteil 12, 14 und Spreizteil 16 sich im Wesentlichen in einer Haupterstreckungsrichtung R erstrecken. Zudem ist eine Mehrzahl an Paaren von Aufgleitschrägen 18₁, 18₂, wobei die Aufgleitschrägen 18₁, 18₂ eines Paares gegeneinander in Haupterstreckungsrichtung R verschiebbar ausgeführt sind und in Abhängigkeit der relativen Position der Aufgleitschrägen 18₁, 18₂ eines Paares zueinander ein Abstand orthogonal zu der Haupterstreckungsrichtung R von erstem und zweitem Klemmteil 12, 14 zueinander einstellbar ist. Diese Lösung mit der Klemmkeilvorrichtung 10 hat den Vorteil, dass sie relativ klein, handlich und einfach in der Handhabung ist. Sie erfordert auch nur eine Zugänglichkeit von einer axialen Seite, die ohnehin die Wartungsseite ist.

## Beschreibung

Die Erfindung betrifft eine Klemmkeilvorrichtung zum Einsetzen in eine Pol-Lücke eines Rotors einer elektrischen Maschine, um den Stator beispielsweise in einem Demontagefall gegen die Schwerkraft und die Magnetkraft am Stator abzustützen. Die elektrische Maschine kann Teil eines Antriebsstrang einer Windkraftanlage sein und über ein Getriebe von dem Windrotor angetrieben werden.

Bei sogenannten mittelschnell laufenden Generatoren, die direkt, d.h. ohne Zwischenschaltung einer Kupplung, an ein Getriebe montiert sind, besteht in gewissen zeitlichen Abständen der Bedarf im Getriebe die ausgangsseitige, d.h. die generatorseitige, Hohlwellenlagerung zu wechseln. Dazu ist der Generatorrotor an einer anderen Komponente der elektrischen Maschine oder an einer eigens dafür vorgesehenen Vorrichtung abzustützen. Bei permanentmagneterregten elektrischen Maschinen haftet der Rotor nicht nur infolge der Schwerkraft, sondern zusätzlich durch die Magnetkraft am Stator. Darum gilt es, bei einem Lagertausch den Rotor nicht auf der Innenfläche der Stator-Bohrung abzulegen. Geschieht dies doch, sind dann enorme Kräfte notwendig, den Rotor wieder vom Stator zu lösen und axial zu positionieren. Dies ist insbesondere bei Generatoren großer Windkraftanlagen problematisch.

Bei mit Permanentmagneten bestückten Rotoren mittelschnell laufender Generatoren musste bisher der Rotor komplett aus der elektrischen Maschine montiert werden, um an die zu wartende Lagerung zu gelangen. Alternativ, im Fall wenn die Nabe/Felge der Maschine teilbar ist, muss der Rotor mit sehr schweren und stabilen Stützvorrichtungen in der Maschine ausgerichtet gehalten werden, sodass nur die Rotornabe zur Lagerwartung demontiert werden muss. Es besteht ein ständiges Bedürfnis die Lagerwartung zu vereinfachen.

Es ist die Aufgabe der Erfindung Maßnahmen aufzuzeigen, die ein Abstützen des Rotors der elektrischen Maschine mit einfachen Mitteln ermöglichen.

Die Lösung der Aufgabe erfolgt durch eine Klemmkeilvorrichtung mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Klemmkeilvorrichtung zum Einsetzen in eine Pol-Lücke eines Rotors einer elektrischen Maschine, umfassend ein erstes Klemmteil, ein zweites Klemmteil, ein Spreizteil, wobei erstes und zweite Klemmteil und Spreizteil sich im Wesentlichen in einer Haupterstreckungsrichtung erstrecken, und eine Mehrzahl an Paaren von Aufgleitschrägen, wobei die Aufgleitschrägen eines Paares gegeneinander in Haupterstreckungsrichtung verschiebbar ausgeführt sind und in Abhängigkeit der relativen Position der Aufgleitschrägen eines Paares zueinander ein Abstand orthogonal zu der Haupterstreckungsrichtung von erstem und zweitem Klemmteil zueinander einstellbar ist.

Bei der nunmehr vorgestellten Lösung wird Klemmkeilvorrichtung aus axialer Richtung in die Pol-Lücke eines Rotors eingesetzt, so dass auf das bisherige Abstützen des Rotors über radial eingeführte lange Schrauben oder Gewindestangen verzichtet werden kann. Für die Klemmkeilvorrichtung ist grundsätzlich keine Zugänglichkeit rund um den Generator mehr erforderlich. Auch kann auf eine schwere, unhandliche geschraubte Stützflansch-Lösungen verzichtet werden, die den Rotor an einer zusätzlichen Zentrierung der Rotorfelge und einer Zentrierung am Stator-Gehäuse fixieren. Diese Lösung mit der Klemmkeilvorrichtung hat den Vorteil, dass sie relativ klein, handlich und einfach in der Handhabung ist. Sie erfordert auch nur eine Zugänglichkeit von einer axialen Seite, die ohnehin die Wartungsseite ist. Somit kann z.B. ein Wechsel der Rotorlagerung, in einer Windkraftanlagen-Gondel durchgeführt werden, ohne dass der komplette Rotor aus der Maschine ausgebaut werden muss. Außerdem kann die Klemmkeilvorrichtung auch zum Transportschutz verwendet und leicht demontiert werden.

In einer bevorzugten Ausgestaltung sind die jeweils ersten Aufgleitschrägen eines Paares auf dem ersten Klemmteil und die jeweils zweiten Aufgleitschrägen eines Paares auf dem Spreizteil angeordnet.

In einer weiterhin bevorzugten Ausgestaltung ist das Spreizteil gegenüber dem ersten und dem zweiten Klemmteil in Haupterstreckungsrichtung zwischen einer eingefahrenen Position und einer ausgefahrenen Position verschiebbar.

In einer zudem bevorzugten Ausgestaltung bildet das Spreizteil endseitig einen Gewindeabschnitt aus. Konkret ausgestaltet kann dabei vorgesehen sein, dass der Gewindeabschnitt über den Bereich von der eingefahrenen bis zur ausgefahrenen Position des Spreizteils zumindest außerhalb des ersten und zweiten Klemmteils liegt. Insbesondere ist dabei bevorzugt, dass eine auf dem Gewindeabschnitt schraubbare Mutter vorgesehen ist, um das Spreizteil gegenüber dem ersten und dem zweiten Klemmteil zumindest von der eingefahrenen Position in die ausgefahrene Position zu bewegen.

Die Aufgabe wird zudem gelöst durch ein Verfahren zum Einsetzen einer Klemmkeilvorrichtung nach einem der vorangegangenen Ansprüche in eine Pol-Lücke eines Rotors, bei dem nach axialem Einsetzen von zumindest drei Klemmkeilvorrichtungen in die Pol-Lücke eines Rotors die Klemmkeilvorrichtungen von einer eingefahrenen Position in eine ausgefahrene Position überführt werden. Das Verfahren kann insbesondere dadurch gekennzeichnet sein, dass die Klemmkeilvorrichtung durch ein auf einem der Gewindeabschnitt des Spreizteils schraubbare Mutter eingeleitete Relativbewegung zwischen dem Spreizteil und dem ersten und zweiten Klemmteil in die ausgefahrene Position überführt wird. Insbesondere kann dabei vorgesehen sein, dass das Überführen des Spreizteils in die ausgefahrene Position den Abstand von erstem und zweitem Klemmteil zueinander orthogonal zu der Haupterstreckungsrichtung vergrößert.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine Axialansicht einer schematischen Darstellung eines Stators und eines Rotors,
Fig. 2: eine perspektivische Ansicht einer schematischen Darstellung eines Stators und eines Rotors,
Fig. 3: eine explodierte Darstellung einer Klemmkeilvorrichtung und
Fig. 4: eine perspektivische Ansicht einer Klemmkeilvorrichtung.

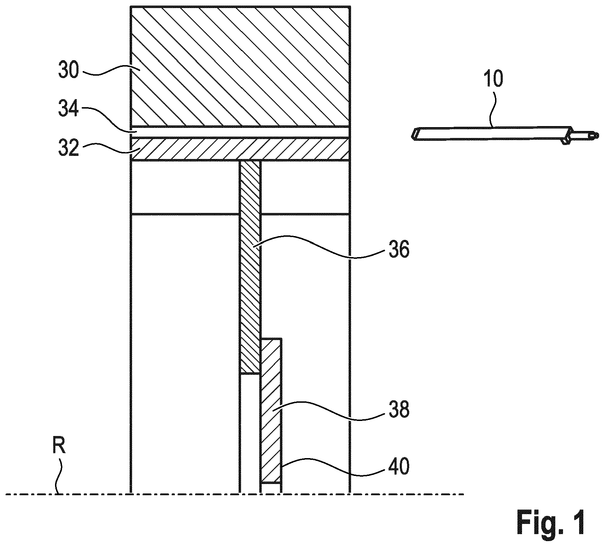

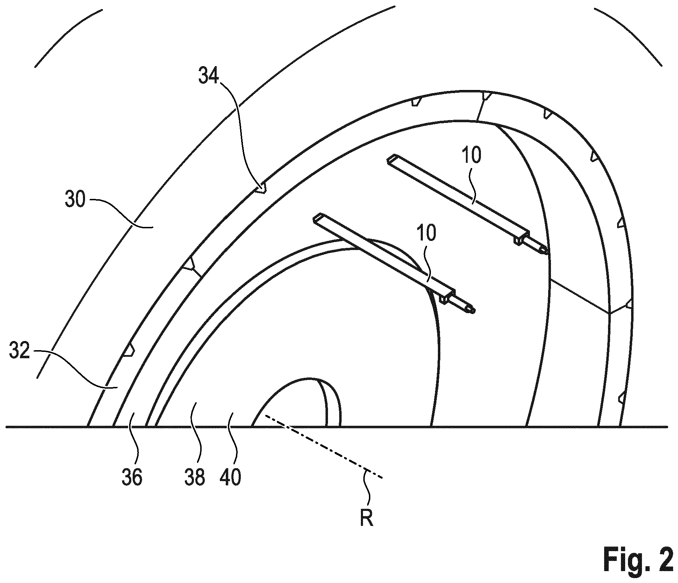

Die Figuren 1 und 2 werden zunächst zusammen beschrieben. Gezeigt ist in einem Axialschnitt - Figur 1 - und in einer perspektivischen Ansicht ein Stator 30, ein in diesem angeordneter Rotor 32 und eine Pol-Lücke 34 zwischen Stator 30 und Rotor 32. Innerhalb des Rotors 32 befindet sich eine Rotorfelge 36 mit einer Rotornabe 38, wobei die Rotornabe 38 radial innen einen Anschlussbereich 40 für ein nicht dargestelltes Wellenelement eines vorgelagerten Getriebes aufweist. Mit dem Bezugszeichen R ist die Rotationsachse bezeichnet, bei der es sich zugleich um eine Haupterstreckungsrichtung handelt. Zudem sind in Figur 1 eine und in der Figur 2 mehrere Klemmkeilvorrichtungen 10 gezeigt, von denen in eine der Pol-Lücken 34 eingeführt werden kann, um den Rotor 32 gegenüber dem Stator 30 abzustützen.

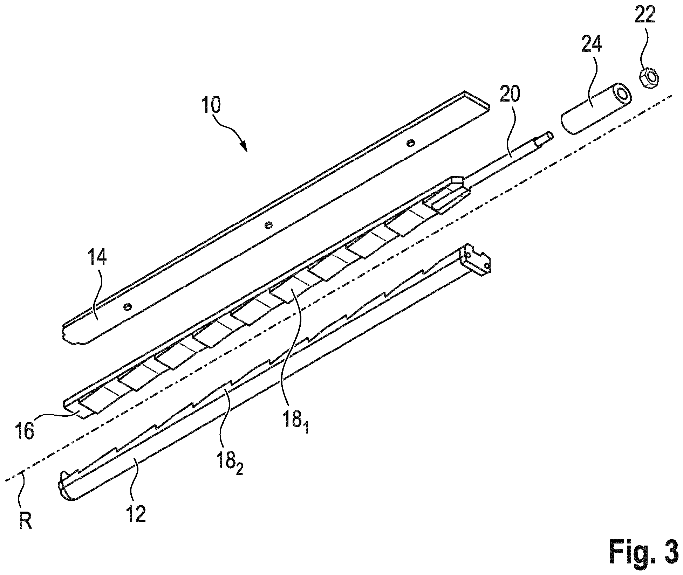

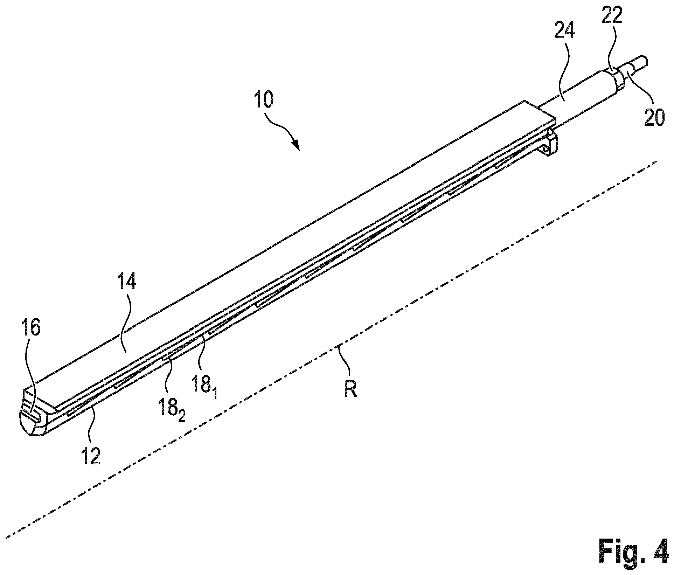

Die Figuren 3 und 4 zeigen die Klemmkeilvorrichtung 10 in einer explodierten Darstellung - Figur 3 - und als perspektivische Ansicht. Die Klemmkeilvorrichtung 10 umfasst ein erstes Klemmteil 12, ein zweites Klemmteil 14 und ein Spreizteil 16. Das erste und zweite Klemmteil 12, 14 und das Spreizteil 16 erstrecken sich im Wesentlichen in der Haupterstreckungsrichtung R. Es sind eine Mehrzahl an Paaren Aufgleitschrägen 18₁, 18₂ vorgesehen. Die Aufgleitschrägen 18₁, 18₂ eines Paares sind gegeneinander in Haupterstreckungsrichtung R verschiebbar ausgeführt. Hierdurch ist in Abhängigkeit der relativen Position der Aufgleitschrägen 18₁, 18₂ eines Paares zueinander ein Abstand orthogonal zu der Haupterstreckungsrichtung R von erstem und zweitem Klemmteil 12, 14 zueinander einstellbar. Über die relative Position der Aufgleitschrägen 18₁, 18₂ eines Paares zueinander kann ein Aufspreizen der Klemmkeilvorrichtung 10 erreicht werden, sodass ein in die Pol-Lücke 34 eingesetzte und aufspreizte Klemmkeilvorrichtung 10 eine Relativbewegung zwischen Stator 30 und Rotor 32 verhindert.

Vorliegend sind die jeweils ersten Aufgleitschrägen 18₁ eines Paares auf dem ersten Klemmteil 12 und die jeweils zweiten Aufgleitschrägen 18₂ eines Paares auf dem Spreizteil 16 angeordnet. In Haupterstreckungsrichtung R weisen die ersten Aufgleitschrägen 18₁ eine entgegengesetzte Steigung als die zweiten Aufgleitschrägen 18₂ auf. Hierüber wird erreicht, dass sich bei einer entgegengesetzten Bewegung von erstem Klemmteil 12 und Spreizteil 16 ein Breitenmaß orthogonal zu der Haupterstreckungsrichtung R vergrößert. Um dies zu erreichen, ist das Spreizteil 16 gegenüber dem ersten und dem zweiten Klemmteil 18₁, 18₂ in Haupterstreckungsrichtung R zwischen einer eingefahrenen Position und einer ausgefahrenen Position verschiebbar ist.

Das Spreizteil 16 bildet endseitig einen Gewindeabschnitt 20 aus, wobei der Gewindeabschnitt 20 über den Bereich von der eingefahrenen bis zur ausgefahrenen Position des Spreizteils 16 zumindest außerhalb des ersten und zweiten Klemmteils 18₁, 18₂ liegt. Zudem ist auf dem Gewindeabschnitt 20 eine schraubbare Mutter 22 vorgesehen, um das Spreizteil 16 gegenüber dem ersten und dem zweiten Klemmteil 18₁, 18₂ zumindest von der eingefahrenen Position in die ausgefahrene Position zu bewegen.

Nachdem eine gewisse Anzahl an Klemmkeilvorrichtung 10, bevorzugt mindestens 3 Klemmkeilvorrichtung 10, in die Pol-Lücke 34 des Rotors 32 axial eingesetzt wurden, werden die Klemmkeilvorrichtungen 10 von einer eingefahrenen Position in eine ausgefahrene Position überführt, um hierdurch den Rotor 32 gegenüber dem Stator 30 in einer Position zu fixieren. Die ausgefahrene Position wird erreicht, indem ein auf einem der Gewindeabschnitt 20 des Spreizteils 16 schraubbare Mutter 22 eine Relativbewegung zwischen dem Spreizteil 16 und dem ersten und zweiten Klemmteil 18₁, 18₂ einleitet.

### Bezugszeichenliste

- 10: Klemmkeilvorrichtung
- 12: Klemmteil
- 14: Klemmteil
- 16: Spreizteil
- 18: Aufgleitschrägen
- 20: Gewindeabschnitt
- 22: Mutter
- 24: Hülse
- 30: Stator
- 32: Rotor
- 34: Pol-Lücke
- 36: Rotorfelge
- 38: Rotornabe
- 40: Anschlussbereich

## Patentansprüche

1. Klemmkeilvorrichtung (10) zum Einsetzen in eine Pol-Lücke eines Rotors einer elektrischen Maschine, umfassend
ein erstes Klemmteil (12), ein zweites Klemmteil (14), ein Spreizteil (16), wobei erstes und zweite Klemmteil (12, 14) und Spreizteil (16) sich im Wesentlichen in einer Haupterstreckungsrichtung R erstrecken, und
eine Mehrzahl an Paaren von Aufgleitschrägen (18₁, 18₂),
wobei die Aufgleitschrägen (18₁, 18₂) eines Paares gegeneinander in Haupterstreckungsrichtung R verschiebbar ausgeführt sind und in Abhängigkeit der relativen Position der Aufgleitschrägen (18₁, 18₂) eines Paares zueinander ein Abstand orthogonal zu der Haupterstreckungsrichtung R von erstem und zweitem Klemmteil (12, 14) zueinander einstellbar ist.

2. Klemmkeilvorrichtung (10) nach Anspruch 1, **dadurch gekennzeichnet, dass** die jeweils ersten Aufgleitschrägen (18₁) eines Paares auf dem ersten Klemmteil (12) und die jeweils zweiten Aufgleitschrägen (18₂) eines Paares auf dem Spreizteil (16) angeordnet sind.

3. Klemmkeilvorrichtung (10) nach Anspruch 2, **dadurch gekennzeichnet, dass** in Haupterstreckungsrichtung R die ersten Aufgleitschrägen (18₁) eine entgegengesetzte Steigung als die zweiten Aufgleitschrägen (18₂) aufweisen.

4. Klemmkeilvorrichtung (10) nach einem der Ansprüche 1 bis 3, **dadurch gekennzeichnet, dass** das Spreizteil (16) gegenüber dem ersten und dem zweiten Klemmteil (18₁, 18₂) in Haupterstreckungsrichtung R zwischen einer eingefahrenen Position und einer ausgefahrenen Position verschiebbar ist.

5. Klemmkeilvorrichtung (10) nach einem der Ansprüche 1 bis 4, **dadurch gekennzeichnet, dass** das Spreizteil (16) endseitig einen Gewindeabschnitt (20) ausbildet.

6. Klemmkeilvorrichtung (10) nach Anspruch 5, **dadurch gekennzeichnet, dass** der Gewindeabschnitt (20) über den Bereich von der eingefahrenen bis zur ausgefahrenen Position des Spreizteils (16) zumindest außerhalb des ersten und zweiten Klemmteils (18₁, 18₂) liegt.

7. Klemmkeilvorrichtung (10) nach Anspruch 5 oder 6, **dadurch gekennzeichnet, dass** eine auf dem Gewindeabschnitt (20) schraubbare Mutter (22) vorgesehen ist, um das Spreizteil (16) gegenüber dem ersten und dem zweiten Klemmteil (18₁, 18₂) zumindest von der eingefahrenen Position in die ausgefahrene Position zu bewegen.

8. Klemmkeilvorrichtung (10) nach einem der Ansprüche 1 bis 7, **dadurch gekennzeichnet, dass** die Klemmkeilvorrichtung (10) aus einem nicht-magnetischen Material gefertigt ist.

9. Verfahren zum Einsetzen einer Klemmkeilvorrichtung (10) nach einem der vorangegangenen Ansprüche in eine Pol-Lücke (34) eines Rotors (32), bei dem nach axialem Einsetzen von zumindest drei Klemmkeilvorrichtungen (10) in die Pol-Lücke (34) eines Rotors (32) die Klemmkeilvorrichtungen (10) von einer eingefahrenen Position in eine ausgefahrene Position überführt werden.

10. Verfahren nach Anspruch 9, **dadurch gekennzeichnet, dass** die Klemmkeilvorrichtung (10) durch ein auf einem der Gewindeabschnitt (20) des Spreizteils (16) schraubbare Mutter (22) eingeleitete Relativbewegung zwischen dem Spreizteil (16) und dem ersten und zweiten Klemmteil (18₁, 18₂) in die ausgefahrene Position überführt wird.

11. Verfahren nach Anspruch 9 oder 10, **dadurch gekennzeichnet, dass** das Überführen des Spreizteils (16) in die ausgefahrene Position den Abstand von erstem und zweitem Klemmteil (18₁, 18₂) zueinander orthogonal zu der Haupterstreckungsrichtung R vergrößert.
